Europäisches Patentamt

European Patent Office

Office européen des brevets

(19)

(11) **EP 0 774 845 A2**

(12) **EUROPÄISCHE PATENTANMELDUNG**

(43) Veröffentlichungstag:
21.05.1997 Patentblatt 1997/21

(51) Int. Cl.⁶: **H04L 9/32**

(21) Anmeldenummer: 96117595.7

(22) Anmeldetag: 31.10.1996

(84) Benannte Vertragsstaaten:
**BE CH DE FR GB IT LI PT**

(30) Priorität: 16.11.1995 DE 19542781

(71) Anmelder: **SIEMENS AKTIENGESELLSCHAFT**
**80333 München (DE)**

(72) Erfinder:
• **Gundlach, Michael, Dr.rer.nat.**
**81739 München (DE)**
• **Ohlendorf, Günter, Dipl.-Ing.**
**82541 Münsing (DE)**
• **Rosenstock, Thomas, Dipl.-Ing.**
**81543 München (DE)**

(54) **Verfahren und Anordnung zur Authentifizierung des Benutzers eines Teilnehmeranschlusses**

(57)     Zur Authentifizierung des Benutzers eines über einen Hauptverteiler an eine Vermittlungsstelle angeschlossenen Teilnehmeranschlusses mit einer sog. intelligenten Teilnehmeranschlußeinrichtung, die sich nach Maßgabe eines bei ihr vorzugsweise auf einer Chipkarte gespeicherten geheimen Teilnehmerschlüssels und eines ebenso gespeicherten Authentifizierungsalgorithmus' in einer Authentifizierungs-Prozedur authentifiziert, wird in der intelligenten Teilnehmeranschlußeinrichtung aus einer für die Vermittlungsstelle und die intelligente Teilnehmeranschlußeinrichtung gültigen, für jede Authentifizierung neuen Prüfzahl und dem gespeicherten geheimen Teilnehmerschlüssel nach Maßgabe des ebenso gespeicherten kryptographischen Authentifizierungsalgorithmus' eine Authentifizierungsnachricht berechnet und zur Vermittlungsstelle übertragen, welche diese Authentifizierungsnachricht mit einer von ihr selbst aus der genannten Prüfzahl und dem auch in der Vermittlungsstelle zur Verfügung stehenden geheimen Teilnehmerschlüssel nach Maßgabe des gleichen kryptographischen Authentifizierungsalgorithmus' berechneten Authentifizierungsnachricht vergleicht.

FIG 1

EP 0 774 845 A2

## Beschreibung

In letzter Zeit wird zunehmend dem Umstand öffentliche Aufmerksamkeit gewidmet, daß eine zwischen Teilnehmeranschluß und Vermittlungsstelle verlaufende Telefonleitung praktisch ungesichert ist und daß Unberechtigte eine solche Leitung (z.B. im Verteilerkasten im Keller eines Mehrfamilienhauses) anzapfen und auf Kosten des Anschlußinhabers telefonieren können.

Um dem zu begegnen, kann man entsprechend erweiterte, gewissermaßen „intelligente" Teilnehmeranschlußeinrichtungen (I-TAE) vorsehen, die sich jeweils gegenüber dem zwischen Teilnehmeranschluß und Vermittlungsstelle liegenden Hauptverteiler in einem kryptographischen Challenge- and Response-Verfahren authentifizieren, indem im Hauptverteiler anhand eines geheimen Benutzerschlüssels und eines Authentifizierungsalgorithmus' überprüft wird, ob der Verbindungswunsch tatsächlich von dem betreffenden Teilnehmeranschluß ausgeht; geheimer Benutzerschlüssel und Authentifizierungsalgorithmus können dabei sowohl in der Teilnehmeranschlußeinrichtung als auch im Hauptverteiler in je einer Chipkarte (z.B. IC-card in Form einer ID-1-card oder einer Plug-in-card) pro Teilnehmeranschluß gespeichert sein.

Eine solche Vorgehensweise läßt indessen auf der einen Seite die Strecke zwischen Hauptverteiler und Vermittlungsstelle (im Vertrauen auf eine erschwerte Zugänglichkeit für Unbefugte) ungesichert und erweist sich auf der anderen Seite insofern als kostenaufwendig, als im Hauptverteiler eine zusätzliche Daten(verarbeitungs)basis für die Authentifizierung vorgesehen werden muß.

Die Erfindung zeigt demgegenüber einen Weg zu einer erhöhten Sicherheit bei der Authentifizierung eines berechtigten nutzers eines Telekommunikations-Teilnehmeranschlußes bei zugleich verringertem Aufwand.

Es sei in diesem Zusammenhang bemerkt, dass Teilnehmer-Authentifizierungsverfahren nach dem - mit einem bidirektionalen Frage-Antwort-Spiel zwischen Vermittlungsstelle und Teilnehmer verbundene - Challenge-Response-Prinzip (z.B. aus AT&T Technical Journal (1994)3 May/June, 7 ... 11; telcom report 13(1990) 1, 28 ... 34; auch DE 295 08 201 U1) bekannt sind.

Die Erfindung zeigt demgenüber einen Weg, ein solches Frage-Antwort-Spiel zu vermeiden.

Die Erfindung betrifft ein Verfahren zur Authentifizierung des Benutzers eines über einen Hauptverteiler an eine Vermittlungsstelle angeschlossenen Teilnehmeranschlusses, demzufolge eine sog. intelligente Teilnehmeranschlußeinrichtung sich nach Maßgabe eines bei ihr vorzugsweise in einer teilnehmerindividuellen Chipkarte gespeicherten geheimen Teilnehmerschlüssels und eines ebenso gespeicherten Authentifizierungsalgorithmus' in einer Authentisierungs-Prozedur authentifiziert; diese Authentifizierung geschieht erfindungsgemäß in der Weise, daß - jeweils nach Erkennung eines Teilnehmerschleifenschlusses und Einstellung eines Sprachsignalweges zwischen Vermittlungsstelle und Teilnehmeranschluß - zu deren Beginn in der intelligenten Teilnehmeranschlußeinrichtung aus einer von ihr generierten, für jede Authentifizierung neuen Prüfzahl und dem gespeicherten geheimen Teilnehmerschlüssel nach Maßgabe des ebenso gespeicherten kryptographischen Authentifizierungsalgorithmus' eine Authentifizierungsnachricht berechnet und zur Vermittlungsstelle übertragen wird, welche diese Authentifizierungsnachricht mit einer von ihr selbst aus einer auch in der Vermittlungsstelle gebildeten Prüfzahl und dem auch in der Vermittlungsstelle zur Verfügung stehenden geheimen Teilnehmerschlüssel nach Maßgabe des in der Vermittlungsstelle ebenfalls gespeicherten kryptographischen Authentifizierungsalgorithmus' berechneten Authentifizierungsnachricht vergleicht und nur bei positivem Vergleichsergebnis die Aussendung des Wähltons zu dem betreffenden Teilnehmeranschluß hin bewirkt und den weiteren Verbindungsaufbau ermöglicht, dagegen bei negativem Vergleichsergebnis die Verbindung abbricht, wobei in der Vermittlungsstelle und in der intelligenten Teilnehmeranschlußeinrichtung des betreffenden Teilnehmeranschlusses nach jeder Authentifizierung die mit einander entsprechenden Startwerten initialisierten Prüfzahlen um einen Zählschritt erhöht werden.

Dabei kann in weiterer Ausgestaltung der Erfindung in der Weise verfahren werden, daß in der Vermittlungsstelle und in der intelligenten Teilnehmeranschlußeinrichtung des betreffenden Teilnehmeranschlusses eine mit gleichen Startwerten initialisierte Prüfzahl nach jeder Authentifizierung um einen Zählschritt erhöht wird, wobei in der intelligenten Teilnehmeranschlußeinrichtung aus der jeweils aktuellen Prüfzahl und dem gespeicherten geheimen Teilnehmerschlüssel nach Maßgabe des ebenso gespeicherten kryptographischen Authentifizierungsalgorithmus' die Authentifizierungsnachricht berechnet und zur Vermittlungsstelle übertragen wird, welche diese Authentifizierungsnachricht mit der von ihr selbst aus der aktuellen Abfrage-Prüfzahl und dem geheimen Teilnehmerschlüssel nach Maßgabe des kryptographischen Authentifizierungsalgorithmus' berechneten Authentifizierungsnachricht vergleicht.

In einer weiteren Ausgestaltung der Erfindung kann in der Weise verfahren werden, daß in der intelligenten Teilnehmeranschlußeinrichtung des betreffenden Teilnehmeranschlusses eine mit um einen Zählschritt höherem Startwert als in der Vermittlungsstelle initialisierte Prüfzahl nach jeder Authentifizierung um einen Zählschritt erhöht wird, wobei in der intelligenten Teilnehmeranschlußeinrichtung aus der jeweils aktuellen Prüfzahl und dem gespeicherten geheimen Teilnehmerschlüssel nach Maßgabe des ebenso gespeicherten kryptographischen Authentifizierungsalgorithmus' die Authentifizierungsnachricht berechnet und zusammen mit der (den) letzten Stelle(n) der aktuellen Prüfzahl zur Vermittlungsstelle übertragen wird, welche anhand der empfangenen letzten Prüfzahlstelle(n) überprüft, ob die aktuelle Prüfzahl der intelligenten Teilnehmeranschlußeinrichtung grösser als die bei der vorhergehenden Authentifizierung verwendete Prüfzahl ist, und zutreffendenfalls die Authentifizierungsnachricht mit der von ihr selbst aus der mit der (den) letzten Prüfzahlstelle(n) gebildeten aktuellen Abfrage-Prüfzahl und dem geheimen Teilnehmerschlüssel nach Maßgabe des kryptographischen Authentifizierungsalgorithmus' berechneten Authentifizierungsnachricht vergleicht.

In einer Schaltungsanordnung zur Authentifizierung des Benutzers eines über einen Hauptverteiler an eine Vermittlungsstelle angeschlossenen Teilnehmeranschlusses mit einer sog. intelligenten Teilnehmeranschlußeinrichtung führt erfindungsgemäß ein vorzugsweise auf einer Chipkarte befindlicher Teilnehmerschlüsselspeicher zu dem einen Eingang eines ebenfalls auf der Chipkarte befindlichen Authentifizierungsnachricht-Rechners, zu dessen anderem Eingang ein eine am Ort der intelligenten Teilnehmeranschlußeinrichtung gespeicherte aktuelle Prüfzahl abgebender und danach um einen Zählschritt weitergeschalteter Prüfzahlgeber führt und der nach Maßgabe eines ebenfalls auf der Chipkarte gespeicherten Authentifizierungsalgorithmus' in einer Authentisierungs-Prozedur eine den Teilnehmeranschluß authentifizierende Authentifizierungsnachricht abgibt; in der Vermittlungsstelle ist erfindungsgemäß ein ursprünglich mit einem vorgegebenen Startwert initialisierter, die jeweilige aktuelle Prüfzahl abgebender und danach um einen Zählschritt weitergeschalteter Abfragegenerator vorgesehen, der ausgangsseitig zu dem einen Eingang eines in der Vermittlungsstelle wirksamen, an seinem anderen Eingang mit dem geheimen Teilnehmerschlüssel des betreffenden Teilnehmeranschlusses beaufschlagten Authentifizierungsnachricht-Rechners führt, dessen Ausgang zu dem einen Eingang eines an seinem anderen Eingang mit der vom Authentifizierungsnachricht-Rechner der intelligenten Teilnehmeranschlußeinrichtung abgegebenen Authentifizierungsnachricht beaufschlagten Vergleichers führt.

In einer anderen Schaltungsanordnung zur Authentifizierung des Benutzers eines über einen Hauptverteiler an eine Vermittlungsstelle angeschlossenen Teilnehmeranschlusses mit einer sog. intelligenten Teilnehmeranschlußeinrichtung führt erfindungsgemäß ein vorzugsweise auf einer Chipkarte befindlicher Teilnehmerschlüsselspeicher zu dem einen Eingang eines ebenfalls auf der Chipkarte befindlichen Authentifizierungsnachricht-Rechners, zu dessen anderem Eingang ein eine am Ort der intelligenten Teilnehmeranschlußeinrichtung gespeicherte aktuelle Prüfzahl abgebender und danach um einen Zählschritt weitergeschalteter Prüfzahlgeber führt und der nach Maßgabe eines ebenfalls auf der Chipkarte gespeicherten Authentifizierungsalgorithmus' in einer Authentisierungs-Prozedur eine den Teilnehmeranschluß authentifizierende Authentifizierungsnachricht abgibt; in der Vermittlungsstelle ist erfindungsgemäß ein nach einer Plausibilitätsprüfung der von der intelligenten Teilnehmeranschlußeinrichtung des betreffenden Teilnehmeranschlusses empfangenen letzten Stelle(n) ihrer aktuellen Prüfzahl die ergänzte, vollständige aktuelle Prüfzahl abgebender Abfragegenerator vorgesehen, der ausgangsseitig zu dem einen Eingang eines in der Vermittlungsstelle wirksamen, an seinem anderen Eingang mit dem geheimen Teilnehmerschlüssel des betreffenden Teilnehmeranschlusses beaufschlagten Authentifizierungsnachricht-Rechners führt, dessen Ausgang zu dem einen Eingang eines an seinem anderen Eingang mit der vom Authentifizierungsnachricht-Rechner der intelligenten Teilnehmeranschlußeinrichtung abgegebenen Authentifizierungsnachricht beaufschlagten Vergleichers führt.

Bei der Teilnehmer-Authentifizierung gemäß der Erfindung bedarf es vorteilhafterweise lediglich einer monodirektionalen Informationsübertragung in Richtung vom Teilnehmer zur Vermittlungsstelle; der Verzicht auf ein "Challenge" erleichtert die nachträgliche Integration einer solchen Authentifizierung in ein bestehendes Telefonnetz mit festgelegten zeitlichen Anforderungen (und auch festgelegter Signalisierung). Die Erfindung bringt den weiteren Vorteil mit sich, bei der Authentifizierung eines berechtigten Benutzers eines Telekommunikations-Teilnehmeranschlußes sowohl die Strecke zwischen Teilnehmeranschluß und Hauptverteiler als auch die Strecke zwischen Hauptverteiler und Vermittlungsstelle gegen unbefugte Benutzer zu sichern und zugleich für die Authentifizierung keine Daten(verarbeitungs)basis im Hauptverteiler zu benötigen, vielmehr von in der Vermittlungsstelle ohnehin vorhandenen Datenverarbeitungskapazitäten Gebrauch machen zu können.

Dabei kann in weiterer Ausgestaltung der Erfindung in der Vermittlungsstelle ein einer Mehrzahl von Teilnehmeranschlüssen gemeinsamer geheimer Hauptschlüssel gespeichert sein, aus dem nach Maßgabe eines entsprechenden kryptographischen Algorithmus' jeweils bei der Authentifizierung eines Teilnehmeranschlusses dessen geheimer Teilnehmerschlüssel berechnet wird. Alternativ können solche geheimen Teilnehmerschlüssel aber auch in der Vermittlungsstelle unmittelbar gespeichert sein.

Prüfzahl und/oder Authentifizierungsnachricht können in weiterer Ausgestaltung der Erfindung in Form von PSK(Phase Shift Keying)- bzw. FSK(Frequency Shift Keying)-Signalen übertragen werden; in weiterer Ausgestaltung der Erfindung kann die Vermittlungsstelle nach positivem Vergleichsergebnis dann von PSK- bzw. FSK-Empfang auf DTMF-Empfang für die gewählte Rufnummer umschalten.

Weitere Besonderheiten der Erfindung werden aus der nachfolgenden näheren Erläuterung eines Ausführungsbeispiels anhand der Zeichnungen ersichtlich. Dabei zeigt

FIG 1    ein Blockschaltbild eines Telekommunikationssystems, in dem die Erfindung Anwendung findet;

FIG 2     verdeutlicht das Zusammenwirken von Vermittlungsstelle und Teilnehmeranschlußeinrichtung bei der Authentifizierung in einer Frage-Antwort-Prozedur, und

FIG 3     verdeutlicht das Zusammenwirken von Vermittlungsstelle und Teilnehmeranschlußeinrichtung bei der Authentifizierung in einer monodirektionalen Authentifizierungsprozedur.

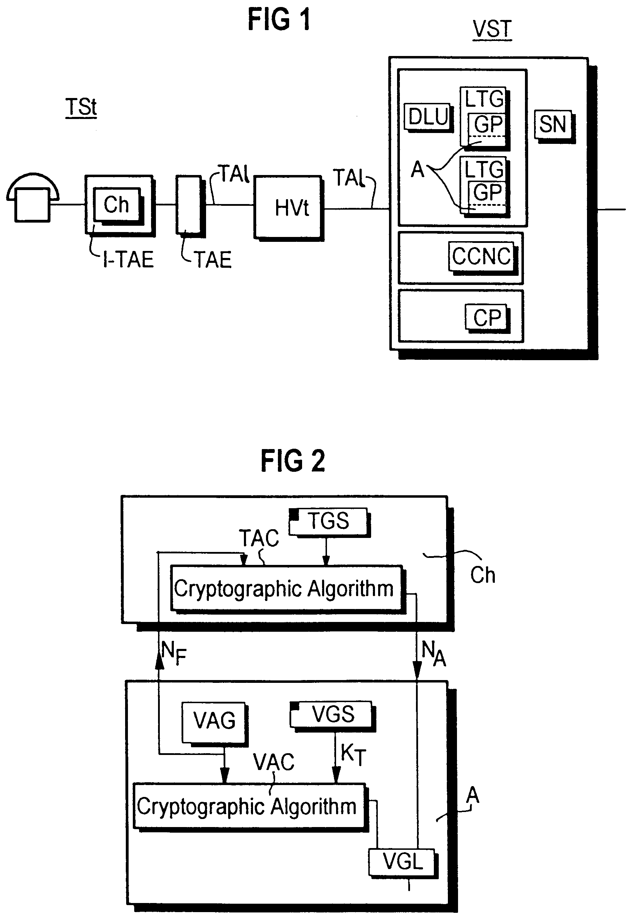

In der Zeichnung FIG 1 ist schematisch in einem zum Verständnis der Erfindung erforderlichen Umfang ein Ausführungsbeispiel eines Telekommunikationssystems skizziert, in dem die Erfindung Anwendung findet. In diesem Telekommunikationssystem ist eine Vermittlungsstelle VSt vorgesehen, an die eine Vielzahl von Teilnehmerstellen angeschlossen sein möge, wie dies in FIG 1 für eine Teilnehmerstelle TSt angedeutet ist. Gemäß FIG 1 ist die - ein Telefon als Endgerät aufweisende - Teilnehmerstelle TSt mit einer intelligenten Teilnehmeranschlußeinrichtung I-TAE versehen, die, wie dies auch in FIG 1 angedeutet ist, ein Zusatzgerät zu einer normalen (postüblichen) Teilnehmeranschlußeinrichtung TAE sein kann, die aber auch in eine solche normale Teilnehmeranschlußeinrichtung TAE integriert sein kann. Wie dies ebenfalls in FIG 1 angedeutet ist, möge die intelligente Teilnehmeranschlußeinrichtung I-TAE mit einer - fest installierten oder auch einsteckbaren und wieder entfernbaren - Authentifizierungs-Chipkarte Ch versehen sein. Dabei kann es sich z.B.um eine IC-Karte in Form einer ID-1-Card handeln oder um eine Plug-in-Card, wie sie ähnlich auch in den meisten GSM-Mobiltelefonen Anwendung findet. Die Teilnehmeranschlußeinrichtung TAE ist mittels einer Teilnehmeranschlußleitung TAl mit einer Vermittlungsstelle VSt verbunden, wobei diese Verbindung über einen Hauptverteiler HVt verläuft. Die Vermittlungsstelle VSt kann eine Ortsvermittlungsstelle vom Typ EWSD sein, in der bekanntlich jeweils eine Mehrzahl von sog. Digital Line Units DLU, die ihrerseits jeweils eine Mehrzahl von Teilnehmeranschlußleitungen TAl abschliessenden sog. Subscriber Line Moduls [SLMD] zusammenfassen, von einer mit einem Group Processor GP versehenen sog. Line Trunk Group LTG zusammengefasst werden. Wie in FIG 1 angedeutet, sind dann die Line Trunk Groups LTG der Vermittlungsstelle VSt mit Authentifizierern A versehen, wobei in der Praxis die Funktionen eines Authentifizierers A weitestgehend in Softwareform im ohnehin vorhandenen Group Processor GP realisiert sein werden. Solche Authentifizierer A dienen zur Authentifizierung der Benutzer von über den Hauptverteiler HVt an die Vermittlungsstelle VSt angeschlossenen Teilnehmeranschlüssen, im Beispiel des Teilnehmeranschlusses TSt.

Ein solcher in der Vermittlungsstelle VSt vorgesehener Authentifizierer A kann im Prinzip, wie dies auch in FIG 2 angedeutet ist, zunächst einen Abfrage-Generator VAG aufweisen, der jeweils nach Erkennung eines Teilnehmerschleifenschlusses und Einstellung eines Sprachsignalweges zwischen Vermittlungstelle VSt und Teilnehmeranschluß TSt eine Abfrage-Prüfzahl (Pseudo Random Number) $N_F$ erzeugt und als Abfrage zur intelligenten Teilnehmeranschlußeinrichtung I-TAE des betreffenden Teilnehmeranschlusses TSt bzw. zur zugehörigen Chipkarte Ch überträgt. Dieser Abfragegenerator VAG führt ausgangsseitig außerdem zu dem einen Eingang eines im Authentifizierer A der Vermittlungsstelle VSt wirksamen Authentifizierungsnachricht-Rechners VAC, der an seinem anderen Eingang mit einem geheimen Teilnehmerschlüssel $K_T$ des zu authentifizierenden Teilnehmeranschlusses beaufschlagt ist. Dieser geheime Teilnehmerschlüssel $K_T$ kann im Authentifizierer A der Vermittlungsstelle VSt in einem Schlüsselspeicher VGS teilnehmerindividuell gespeichert sein; es kann in der Vermittlungsstelle VSt aber auch ein einer Mehrzahl von Teilnehmeranschlüssen, z.B. den Teilnehmeranschlüssen einer Line Trunk Group LTG oder auch allen Teilnehmeranschlüssen der Vermittlungsstelle VSt, gemeinsamer geheimer Hauptschlüssel $K_M$ gespeichert sein, aus dem bei der Authentifizierung eines Teilnehmeranschlusses nach Maßgabe eines entsprechenden kryptographischen Algorithmus' z.B. unter Verwendung der Rufnummer T des betreffenden Teilnehmers dessen geheimer Teilnehmerschlüssel $K_T = f(K_M, T)$ jeweils von Fall zu Fall berechnet wird. Nach Maßgabe eines ebenfalls in der Vermittlungsstelle gespeicherten Authentifizierungsalgorithmus' (Cryptographic Algorithm) errechnet der Authentifizierungsnachricht-Rechner VAC eine den Teilnehmeranschluß TSt authentifizierende Authentifizierungsnachricht. Der Ausgang des Authentifizierungsnachricht-Rechners VAC führt zu dem einen Eingang eines Vergleichers VGL, der an seinem anderen Eingang mit einer von einem entsprechenden Authentifizierungsnachricht-Rechner (TAC in FIG 2) der intelligenten Teilnehmeranschlußeinrichtung I-TAE abgegebenen Antwort-Authentifizierungsnachricht beaufschlagt ist.

In der intelligenten Teilnehmeranschlußeinrichtung I-TAE (FIG 1) befindet sich auf der Chipkarte Ch (in FIG 1 und FIG 2) ein den geheimen Teilnehmerschlüssel $K_T$ des betreffenden Teilnehmeranschlusses speichernder Teilnehmerschlüsselspeicher TGS, der ausgangsseitig zu dem einen Eingang eines ebenfalls auf der Chipkarte Ch befindlichen Authentifizierungsnachricht-Rechners TAC führt. An seinem anderem Eingang wird der Authentifizierungsnachricht-Rechner TAC mit der Abfrage-Prüfzahl $N_F$ beaufschlagt, die vom zugehörigen Abfragegenerator VAG der Vermittlungsstelle (VSt in FIG 1) zur intelligenten Teilnehmeranschlußeinrichtung I-TAE übertragen worden ist. Nach Maßgabe des ebenfalls auf der Chipkarte Ch gespeicherten Authentifizierungsalgorithmus' errechnet der Authentifizierungsnachricht-Rechner TAC aus Abfrage-Prüfzahl $N_F$ und Teilnehmerschlüssel $K_T$ eine den Teilnehmeranschluß TSt authentifizierende Authentifizierungsnachricht, die dann zum Vergleicher VGL des Authentifizierers A der Vermittlungsstelle VSt übertragen wird.

Die der Authentifizierung dienenden Daten (Abfrage-Prüfzahl $N_F$ und Antwort-Authentifizierungsnachricht $N_A = g(K_T, N_F)$, worin g der in der intelligenten Teilnehmeranschlußeinrichtung I-TAE bzw. auf der zugehörigen Chipkarte Ch gespeicherte Authentifizierungsalgorithmus ist, werden zweckmässigerweise in Form von PSK(Phase Shift Keying)-Signalen oder FSK(Frequency Shift Keying)-Signalen übertragen, wozu, ohne daß dies in den Zeichnungen näher dargestellt ist, die intelligente Teilnehmeranschlußeinrichtung I-TAE und die Line Trunk Group LTG jeweils mit einem entsprechenden FSK-(bzw. PSK-)Code-Sender und -Empfänger versehen sind.

Die in den Zeichnungen FIG 1 und FIG 2 umrissene Schaltungsanordnung arbeitet dann wie folgt.

Wird in der Teilnehmerstelle TSt der Hörer abgenommen oder durch impulsartiges Niederdrücken des Hakenumschalters ein sog. Hook Flash bewirkt, so wird die intelligente Teilnehmeranschlußeinrichtung I-TAE empfangsbereit für die Abfrage-Prüfzahl $N_F$; dabei kann die Empfangsbereitschaft auch durch einen Timer auf eine zur Authentifizierung ausreichende Zeitspanne von z.B. 500 ms beschränkt sein, um einem Anstoßen der Authentifizierungsprozedur durch Unberechtigte entgegenzuwirken. Nach Erkennen des Schleifenschlusses und des Off-Hook-Zustands durch die Line Trunk Group LTG stellt diese einen Sprachsignalweg zwischen Vermittlungsstelle VSt und Teilnehmeranschluß TSt ein, berechnet dann eine Pseudo-Zufallszahl und sendet diese als Abfrage-Prüfzahl $N_F$ zur intelligenten Teilnehmeranschlußeinrichtung I-TAE der Teilnehmerstelle TSt.

Line Trunk Group LTG und intelligente Teilnehmeranschlußeinrichtung I-TAE berechnen nun jede für sich aus der Prüfzahl $N_F$ und dem in der intelligenten Teilnehmeranschlußeinrichtung I-TAE gespeicherten und in der Line Trunk Group LTG ebenfalls gespeicherten oder aber aus der Rufnummer der Teilnehmerstelle TSt berechneten geheimen Teilnehmerschlüssel $K_T$ nach Maßgabe des ebenso gespeicherten kryptographischen Authentifizierungsalgorithmus' eine Authentifizierungsnachricht $N_A$, wobei die in der intelligenten Teilnehmeranschlußeinrichtung I-TAE berechnete Authentifizierungsnachricht als Antwort $N_A = g(K_T, N_F)$ zur Vermittlungsstelle VSt übertragen wird.

Hier vergleicht die Line Trunk Group LTG die empfangenen Authentifizierungsnachricht $N_A$ mit der von ihr selbst berechneten Authentifizierungsnachricht auf Übereinstimmung.

Bei positivem Vergleichsergebnis bewirkt die Line Trunk Group LTG dann, ohne daß dies noch näher erläutert werden müsste, die Aussendung des Wähltons zu dem betreffenden Teilnehmeranschluß TSt hin und ermöglicht den weiteren Verbindungsaufbau; dabei schaltet die Vermittlungsstelle VSt erforderlichenfalls von PSK-bzw. FSK-Empfang auf DTMF-Empfang für die vom Teilnehmer zu wählende Rufnummer um. Bei negativem Vergleichsergebnis bewirkt die Line Trunk Group LTG dagegen den Abbruch der Verbindung.

Versucht ein "Hacker", unbefugt zu telefonieren, so erkennt die Line Trunk Group LTG beim Authentifizierungsnachricht-Vergleich keine Übereinstimmung bzw. einen Authentifizierungsfehler und bricht unter Anlegung des Besetzttons die Verbindung ab.

Das Gleiche passiert auch, wenn der A-Teilnehmer TSt wählt, bevor der Wählton angelegt wurde: Hierdurch wird der Authentifizierungscode verfälscht, und die Line Trunk Group LTG erkennt beim Vergleich der Authentifizierungsnachrichten keine Übereinstimmung und bricht unter Anlegung des Besetzttons die Verbindung ab.

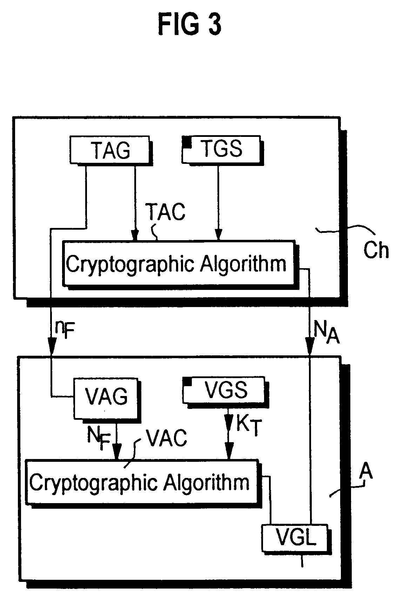

Gemäß FIG 3 befindet sich auf der Chipkarte Ch (in FIG 1 und FIG 3) der intelligenten Teilnehmeranschlußeinrichtung I-TAE (FIG 1) wiederum ein den geheimen Teilnehmerschlüssel $K_T$ des betreffenden Teilnehmeranschlusses speichernder Teilnehmerschlüsselspeicher TGS, der ausgangsseitig zu dem einen Eingang eines ebenfalls auf der Chipkarte Ch befindlichen Authentifizierungsnachricht-Rechners TAC führt. An seinem anderem Eingang wird der Authentifizierungsnachricht-Rechner TAC mit einer bei der intelligenten Teilnehmeranschlußeinrichtung I-TAE gespeicherten aktuellen Prüfzahl $N_F$ beaufschlagt. Hierzu ist die Chipkarte Ch mit einem entsprechenden Prüfzahlgeber TAG versehen, in dem eine ursprünglich initialisierte und dann nach jeder Authentifizierung chipintern um einen Zählschritt erhöhte Prüfzahl $N_F$ gespeichert ist. Nach Maßgabe des ebenfalls auf der Chipkarte Ch gespeicherten Authentifizierungsalgorithmus' errechnet der Authentifizierungsnachricht-Rechner TAC aus der aktuellen Prüfzahl $N_F$ und dem Teilnehmerschlüssel $K_T$ eine den Teilnehmeranschluß TSt authentifizierende Authentifizierungsnachricht $N_A$; vom Ausgang des Authentifizierungsnachricht-Rechners TAC gelangt die Authentifizierungsnachricht $N_A$ dann zum Authentifizierer A der Vermittlungsstelle Vst. In entsprechender Weise gelangt (gelangen) auch die von einem entprechenden Ausgang des Prüfzahlgebers TAG gesondert ausgegebene(n) letzte(n) Stelle(n) $n_F$ der aktuellen Prüfzahl zum Authentifizierer A der Vermittlungsstelle VSt.

Dabei können die der Authentifizierung dienenden Daten (Authentifizierungsnachricht $N_A$ und letzte Stelle(n) $n_F$ der Prüfzahl wiederum in Form von PSK(Phase Shift Keying)-Signalen oder auch FSK(Frequency Shift Keying)-Signalen übertragen werden, ohne daß dies noch näherer Erläuterungen bedarf.

Der in der Vermittlungsstelle VSt vorgesehene Authentifizierer A weist wiederum, wie dies auch in FIG 3 angedeutet ist, einen Abfragegenerator VAG auf, in dem im Vergleich zum Prüfzahlgeber TAG ursprünglich eine um einen Zählschritt niedrigere Prüfzahl initialisiert worden sein möge. Dieser Anfragegenerator VAG gibt jeweils nach einer Plausibilitätsprüfung der von der intelligenten Teilnehmeranschlußeinrichtung (I-TAE) des betreffenden Teilnehmeranschlusses (TSt) empfangenen letzten Stelle(n) $n_F$ ihrer aktuellen Prüfzahl die vervollständigte aktuelle Prüfzahl ab. Zur Plausibilitätsprüfung wird (werden) die von der Chipkarte Ch der intelligenten Teilnehmeranschlußeinrichtung (I-TAE) her empfangene(n) letzte(n)Stelle(n) $n_F$ der aktuellen Prüfzahl so ergänzt, daß die Differenz zu der im Abfragegenerator VAG gespeicherten entsprechenden Prüfzahl minimal ist.

Ist zum Beispiel auf der Chipkarte Ch die aktuelle Prüfzahl $N_F = 31$, wovon die letzte Stelle $n_F = 1$ übertragen wird, und hat die im Abfragegenerator VAG noch gespeicherte, von ihm zuletzt abgegebene Prüfzahl den Wert 29, so wird $n_F$ zweckmässigerweise zu 31 ergänzt, da die Differenz zwischen 31 und 29 nur 2 beträgt; bei einer Ergänzung zu 21 würde sie dagegen schon 8 betragen.

Wird in einem anderen Beispiel eine letzte Stelle $n_F = 7$ übertragen und hat die im Abfragegenerator VAG noch gespeicherte, von ihm zuletzt abgegebene Prüfzahl den Wert 29, so wird $n_F$ zweckmäßigerweise zu 27 ergänzt, da die Differenz zwischen 27 und 29 ebenfalls nur 2 beträgt und bei einer Ergänzung zu 37 wiederum schon 8 betragen würde.

Es kann dann beim Abfragegenerator VAG ein Vergleicher zum Vergleich der so ergänzten aktuellen Prüfzahl der Chipkarte Ch der intelligenten Teilnehmeranschlußeinrichtung (I-TAE) mit der im Abfragegenerator VAG jeweils gespeicherten, von ihm zuletzt abgegebenen Prüfzahl vorgesehen sein, der nur dann die ergänzte bzw. vervollständigte aktuelle Prüfzahl der Chipkarte Ch akzeptiert, wenn (wie im ersten Beispiel) ihr Wert grösser ist als der Wert der im Abfragegenerator VAG bislang gespeicherten, von ihm zuletzt abgegebenen Prüfzahl; diese Prüfzahl wird dann durch die akzeptierte Prüfzahl als neue aktuelle Prüfzahl $N_F$ ersetzt. Andernfalls (im zweiten Beispiel) bleibt die bislang im Abfragegenerator VAG gespeicherte Prüfzahl unverändert, denn man kann vermuten, daß ein Unbefugter früher verwendete Authentifizierungsdaten abgehört hat und nun erneut benutzt, um eine Authentifizierung vorzutäuschen die Line Trunk Group LTG (in FIG 1) bewirkt daher den Abbruch der Verbindung.

Der in der Vermittlungsstelle VSt vorgesehene Authentifizierer A kann aber auch einen Abfragegenerator VAG aufweisen, in dem eine ursprünglich mit dem gleichen Startwert wie der Prüfzahlgeber TAG initialisierte und dann nach jeder Authentifizierung um einen Zählschritt erhöhte aktuelle Prüfzahl $N_F$ gespeichert ist, wobei es keiner Übertragung und Plausibilitätsprüfung der letzten Stelle(n) $n_F$ der aktuellen Prüfzahl der Chipkarte Ch bedarf.

Der Abfragegenerator VAG führt ausgangsseitig zu dem einen Eingang des im Authentifizierer A (in FIG 1 und FIG 3) der Vermittlungsstelle VSt (in FIG 1) wirksamen Authentifizierungsnachricht-Rechners VAC, an den er jeweils - ggf. nach Plausibilitätsprüfung und Akzeptierung der von der Chipkarte Ch der intelligenten Teilnehmeranschlußeinrichtung (I-TAE in FIG 1) des zugehörigen Teilnehmeranschlusses (TSt in FIG 1) empfangenen letzten Stellen ihrer aktuellen Prüfzahl - die vollständige aktuelle Prüfzahl $N_F$ abgibt. An seinem anderen Eingang wird der Authentifizierungsnachricht-Rechner VAC mit dem geheimen Teilnehmerschlüssel $K_T$ des zu authentifizierenden Teilnehmeranschlusses beaufschlagt. Dieser geheime Teilnehmerschlüssel $K_T$ kann wiederum in einem Schlüsselspeicher VGS teilnehmerindividuell gespeichert sein; es kann aber auch ein einer Mehrzahl von Teilnehmeranschlüssen gemeinsamer geheimer Hauptschlüssel $K_M$ gespeichert sein, aus dem bei der Authentifizierung eines Teilnehmeranschlusses nach Maßgabe eines entsprechenden kryptographischen Algorithmus' z.B. unter Verwendung der Rufnummer T des betreffenden Teilnehmers dessen geheimer Teilnehmerschlüssel $K_T = f(K_M, T)$ jeweils von Fall zu Fall berechnet wird. Nach Maßgabe eines ebenfalls in der Vermittlungsstelle gespeicherten Authentifizierungsalgorithmus' (Cryptographic Algorithm) errechnet der Authentifizierungsnachricht-Rechner VAC wiederum aus Prüfzahl $N_F$ und Teilnehmerschlüssel $K_T$ eine den Teilnehmeranschluß TSt authentifizierende Authentifizierungsnachricht. Der Ausgang des Authentifizierungsnachricht-Rechners VAC führt wiederum zu dem einen Eingang eines Vergleichers VGL, der an seinem anderen Eingang mit der von dem Authentifizierungsnachricht-Rechner TAC der intelligenten Teilnehmeranschlußeinrichtung abgegebenen Authentifizierungsnachricht $N_A$ beaufschlagt ist.

Die in den Zeichnungen FIG 1 und FIG 3 umrissene Schaltungsanordnung arbeitet dann wie folgt.

Wurde in der Teilnehmerstelle TSt der Hörer abgenommen oder durch impulsartiges Niederdrücken des Hakenumschalters ein sog. Hook Flash bewirkt und hat die Line Trunk Group LTG nach Erkennen des Schleifenschlusses und des Off-Hook-Zustands einen Sprachsignalweg zwischen Vermittlungsstelle VSt und Teilnehmeranschluß TSt eingestellt, so wird auf der Chipkarte Ch der intelligenten Teilnehmeranschlußeinrichtung I-TAE aus der im Prüfzahlgeber TAG gerade gespeicherten aktuellen Prüfzahl $N_F$ und dem im Teilnehmerschlüsselspeicher TGS gespeicherten geheimen Teilnehmerschlüssel $K_T$ im Authentifizierungsnachricht-Rechner TAC eine Authentifizierungsnachricht $N_A$ berechnet und zu dem in der Line Trunk Group LTG befindlichen Authentifizierer A übertragen; ggf. werden vom Prüfzahlgeber TAG her auch die letzten Stellen $n_F$ der aktuellen Prüfzahl $N_F$ zum Authentifizierer A übertragen.

In der Line Trunk Group LTG werden ggf. die hier empfangenen letzten Stellen $n_F$ der aktuellen Prüfzahl $N_F$ einer Plausibilitätsprüfung unterzogen, indem überprüft wird, ob die aktuelle Prüfzahl der intelligenten Teilnehmeranschlußeinrichtung grösser als die bei der vorhergehenden Authentifizierung verwendete Prüfzahl ist.

Der Abfragegenerator VAG gibt dann die vollständige aktuelle Prüfzahl $N_F$ ab, und der Authentifizierungsnachricht-Rechner VAC berechnet daraus und aus dem im Teilnehmerschlüsselspeicher TGS gespeicherten geheimen Teilnehmerschlüssel $K_T$ eine Authentifizierungsnachricht; schließlich vergleicht die Line Trunk Group LTG im Vergleicher VGL wiederum diese von ihr selbst berechnete Authentifizierungsnachricht mit der von der Chipkarte Ch der intelligenten Teilnehmeranschlußeinrichtung I-TAE her empfangenen Authentifizierungsnachricht $N_A$ auf Übereinstimmung. Bei positivem Vergleichsergebnis bewirkt die Line Trunk Group LTG dann wiederum die Aussendung des Wähltons zu dem betreffenden Teilnehmeranschluß TSt hin und ermöglicht den weiteren Verbindungsaufbau, und bei negativem Vergleichsergebnis bewirkt die Line Trunk Group LTG den Abbruch der Verbindung.

Beim Versuch eines "Hackers", unbefugt zu telefonieren, erkennt die Line Trunk Group LTG auch hier beim Authentifizierungsnachricht-Vergleich keine Übereinstimmung bzw. einen Authentifizierungsfehler und bricht unter Anlegung des Besetzttons die Verbindung ab. Gleiches passiert auch, wenn der A-Teilnehmer TSt wählt, bevor der Wählton angelegt wurde.

## Patentansprüche

1. Verfahren zur Authentifizierung des Benutzers eines über einen Hauptverteiler (HVt) an eine Vermittlungsstelle (VSt) angeschlossenen Teilnehmeranschlusses (TSt), demzufolge eine sog. intelligente Teilnehmeranschlußeinrichtung (I-TAE) sich nach Maßgabe eines bei ihr vorzugsweise auf einer Chipkarte (Ch) gespeicherten geheimen Teilnehmerschlüssels und eines ebenso gespeicherten Authentifizierungsalgorithmus' in einer Authentisierungs-Prozedur authentifiziert, indem zu deren Beginn in der intelligenten Teilnehmeranschlußeinrichtung (I-TAE) aus einer von ihr generierten, für jede Authentifizierung neuen Prüfzahl ($N_F$) und dem gespeicherten geheimen Teilnehmerschlüssel nach Maßgabe des ebenso gespeicherten kryptographischen Authentifizierungsalgorithmus' eine Authentifizierungsnachricht ($N_A$) berechnet und zur Vermittlungsstelle (VSt) übertragen wird, welche diese Authentifizierungsnachricht ($N_A$) mit einer von ihr selbst aus einer auch in der Vermittlungsstelle gebildeten Prüfzahl ($N_F$) und dem auch in der Vermittlungsstelle (VSt) zur Verfügung stehenden geheimen Teilnehmerschlüssel nach Maßgabe des in der Vermittlungsstelle (VSt) ebenfalls gespeicherten kryptographischen Authentifizierungsalgorithmus' berechneten Authentifizierungsnachricht vergleicht und nur bei positivem Vergleichsergebnis die Aussendung des Wähltons zu dem betreffenden Teilnehmeranschluß (TSt) hin bewirkt und den weiteren Verbindungsaufbau ermöglicht, dagegen bei negativem Vergleichsergebnis die Verbindung abbricht, wobei in der Vermittlungsstelle (VSt) und in der intelligenten Teilnehmeranschlußeinrichtung (I-TAE) des betreffenden Teilnehmeranschlusses nach jeder Authentifizierung die mit einander entsprechenden Startwerten initialisierten Prüfzahlen um einen Zählschritt erhöht werden.

2. Verfahren nach Anspruch 1,
   **dadurch gekennzeichnet,**
   daß in der Vermittlungsstelle (VSt) und in der intelligenten Teilnehmeranschlußeinrichtung (I-TAE) des betreffenden Teilnehmeranschlusses eine mit gleichen Startwerten initialisierte Prüfzahl nach jeder Authentifizierung um einen Zählschritt erhöht wird, wobei in der intelligenten Teilnehmeranschlußeinrichtung (I-TAE) aus der jeweils aktuellen Prüfzahl ($N_F$) und dem gespeicherten geheimen Teilnehmerschlüssel nach Maßgabe des ebenso gespeicherten kryptographischen Authentifizierungsalgorithmus' die Authentifizierungsnachricht ($N_A$) berechnet und zur Vermittlungsstelle (VSt) übertragen wird, welche diese Authentifizierungsnachricht ($N_A$) mit der von ihr selbst aus der aktuellen Abfrage-Prüfzahl und dem geheimen Teilnehmerschlüssel nach Maßgabe des kryptographischen Authentifizierungsalgorithmus' berechneten Authentifizierungsnachricht vergleicht.

3. Verfahren nach Anspruch 1,
   **dadurch gekennzeichnet,**
   daß in der intelligenten Teilnehmeranschlußeinrichtung (I-TAE) des betreffenden Teilnehmeranschlusses eine mit um einen Zählschritt höherem Startwert als in der Vermittlungsstelle (VSt) initialisierte Prüfzahl nach jeder Authentifizierung um einen Zählschritt erhöht wird, wobei in der intelligenten Teilnehmeranschlußeinrichtung (I-TAE) aus der jeweils aktuellen Prüfzahl ($N_F$) und dem gespeicherten geheimen Teilnehmerschlüssel nach Maßgabe des ebenso gespeicherten kryptographischen Authentifizierungsalgorithmus' die Authentifizierungsnachricht ($N_A$) berechnet und zusammen mit der (den) letzten Stelle(n) ($n_F$) der aktuellen Prüfzahl zur Vermittlungsstelle (VSt) übertragen wird, welche anhand der empfangenen letzten Prüfzahlstelle(n) ($n_F$) überprüft, ob die aktuelle Prüfzahl der intelligenten Teilnehmeranschlußeinrichtung (I-TAE) grösser als die bei der vorhergehenden Authentifizierung verwendete Prüfzahl ist, und zutreffendenfalls die Authentifizierungsnachricht ($N_A$) mit der von ihr selbst aus der mit der (den) letzten Prüfzahlstelle(n) ($n_F$) gebildeten aktuellen Abfrage-Prüfzahl ($N_F$) und dem geheimen Teilnehmerschlüssel nach Maßgabe des kryptographischen Authentifizierungsalgorithmus' berechneten Authentifizierungsnachricht vergleicht.

4. Verfahren nach einem der Ansprüche 1 bis 3,
   **dadurch gekennzeichnet,**
   daß die geheimen Teilnehmerschlüssel in der Vermittlungsstelle (VSt) gespeichert werden.

5. Verfahren nach einem der Ansprüche 1 bis 3,
   **dadurch gekennzeichnet,**
   daß in der Vermittlungsstelle (VSt) ein einer Mehrzahl von Teilnehmeranschlüssen gemeinsamer geheimer Hauptschlüssel gespeichert wird, aus dem nach Maßgabe eines entsprechenden kryptographischen Algorithmus' jeweils bei der Authentifizierung eines Teilnehmeranschlusses dessen geheimer Teilnehmerschlüssel berechnet wird.

6. Verfahren nach einem der Ansprüche 1 bis 5,
**dadurch gekennzeichnet,**
daß Prüfzahl ($N_F$) und/oder Authentifizierungsnachricht ($N_A$) in Form von PSK(Phase Shift Keying)-Signalen übertragen werden.

7. Verfahren nach einem der Ansprüche 1 bis 5,
**dadurch gekennzeichnet,**
daß Prüfzahl ($N_F$) und/oder Authentifizierungsnachricht ($N_A$) in Form von FSK(Frequency Shift Keying)-Signalen übertragen werden.

8. Verfahren nach einem der Ansprüche 6 oder 7,
**dadurch gekennzeichnet,**
daß die Vermittlungsstelle (VSt) nach positivem Vergleichsergebnis von PSK- bzw. FSK-Empfang auf DTMF-Empfang für die gewählte Rufnummer umschaltet.

9. Schaltungsanordnung zur Authentifizierung des Benutzers eines über einen Hauptverteiler (HVt) an eine Vermittlungsstelle (VSt) angeschlossenen Teilnehmeranschlusses (TSt) mit einer sog. intelligenten Teilnehmeranschlußeinrichtung (I-TAE), bei der ein vorzugsweise auf einer Chipkarte (Ch) befindlicher Teilnehmerschlüsselspeicher (TGS) zu dem einen Eingang eines ebenfalls auf der Chipkarte (Ch) befindlichen Authentifizierungsnachricht-Rechners (TAC) führt, zu dessen anderem Eingang ein eine am Ort der intelligenten Teilnehmeranschlußeinrichtung (I-TAE) gespeicherte aktuelle Prüfzahl abgebender und danach um einen Zählschritt weitergeschalteter Prüfzahlgeber (TAG) führt und der nach Maßgabe eines ebenfalls auf der Chipkarte (Ch) gespeicherten Authentifizierungsalgorithmus' in einer Authentisierungs-Prozedur eine den Teilnehmeranschluß authentifizierende Authentifizierungsnachricht ($N_A$) abgibt, und/oder bei der in der Vermittlungsstelle (VSt) ein ursprünglich mit einem vorgegebenen Startwert initialisierter, die jeweilige aktuelle Prüfzahl abgebender und danach um einen Zählschritt weitergeschalteter Abfragegenerator (VAG) vorgesehen ist, der ausgangsseitig zu dem einen Eingang eines in der Vermittlungsstelle (VSt) wirksamen, an seinem anderen Eingang mit dem geheimen Teilnehmerschlüssel des betreffenden Teilnehmeranschlusses beaufschlagten Authentifizierungsnachricht-Rechners (VAC) führt, dessen Ausgang zu dem einen Eingang eines an seinem anderen Eingang mit der vom Authentifizierungsnachricht-Rechner (TAC) der intelligenten Teilnehmeranschlußeinrichtung (I-TAE) abgegebenen Authentifizierungsnachricht ($N_A$) beaufschlagten Vergleichers (VGL) führt.

10. Schaltungsanordnung zur Authentifizierung des Benutzers eines über einen Hauptverteiler (HVt) an eine Vermittlungsstelle (VSt) angeschlossenen Teilnehmeranschlusses (TSt) mit einer sog. intelligenten Teilnehmeranschlußeinrichtung (I-TAE), bei der ein vorzugsweise auf einer Chipkarte (Ch) befindlicher Teilnehmerschlüsselspeicher (TGS) zu dem einen Eingang eines ebenfalls auf der Chipkarte (Ch) befindlichen Authentifizierungsnachricht-Rechners (TAC) führt, zu dessen anderem Eingang ein eine am Ort der intelligenten Teilnehmeranschlußeinrichtung (I-TAE) gespeicherte aktuelle Prüfzahl abgebender und danach um einen Zählschritt weitergeschalteter Prüfzahlgeber (TAG) führt und der nach Maßgabe eines ebenfalls auf der Chipkarte (Ch) gespeicherten Authentifizierungsalgorithmus' in einer Authentisierungs-Prozedur eine den Teilnehmeranschluß authentifizierende Authentifizierungsnachricht ($N_A$) abgibt, und/oder bei der in der Vermittlungsstelle (VSt) ein nach einer Plausibilitätsprüfung der von der intelligenten Teilnehmeranschlußeinrichtung (I-TAE) des betreffenden Teilnehmeranschlusses (TSt) empfangenen letzten Stelle(n) ihrer aktuellen Prüfzahl die vervollständigte aktuelle Prüfzahl abgebender Abfragegenerator (VAG) vorgesehen ist, der ausgangsseitig zu dem einen Eingang eines in der Vermittlungsstelle (VSt) wirksamen, an seinem anderen Eingang mit dem geheimen Teilnehmerschlüssel des betreffenden Teilnehmeranschlusses beaufschlagten Authentifizierungsnachricht-Rechners (VAC) führt, dessen Ausgang zu dem einen Eingang eines an seinem anderen Eingang mit der vom Authentifizierungsnachricht-Rechner (TAC) der intelligenten Teilnehmeranschlußeinrichtung (I-TAE) abgegebenen Authentifizierungsnachricht ($N_A$) beaufschlagten Vergleichers (VGL) führt.

11. Schaltungsanordnung nach einem der Ansprüche 9 oder 10,
**dadurch gekennzeichnet,**
daß die intelligente Teilnehmeranschlußeinrichtung (I-TAE) ein Zusatzgerät zu einer normalen Teilnehmeranschlußeinrichtung (TAE) ist.

12. Schaltungsanordnung nach einem der Ansprüche 9 oder 10,
**dadurch gekennzeichnet,**
daß die intelligente Teilnehmeranschlußeinrichtung (I-TAE) in die normale Teilnehmeranschlußeinrichtung (TAE) integriert ist.

13. Schaltungsanordnung nach einem der Ansprüche 9 bis 12,
**dadurch gekennzeichnet,**
daß die intelligente Teilnehmeranschlußeinrichtung (I-TAE) mit einer fest installierten, Teilnehmerschlüsselspeicher (TGS) und Authentifizierungsnachricht-Rechner (TAC) enthaltenden Chipkarte

(Ch) versehen ist.

## FIG 1

TSt

VST

DLU

LTG
GP

SN

A

LTG
GP

Ch

I-TAE

TAE

TAI

HVt

TAI

CCNC

CP

## FIG 2

TGS

TAC

Cryptographic Algorithm

Ch

$N_F$

$N_A$

VAG

VGS

$K_T$

VAC

Cryptographic Algorithm

A

VGL

# FIG 3